# EUROPÄISCHE PATENTSCHRIFT

(11) **EP 2 252 805 B1**
(45) Veröffentlichungstag und Bekanntmachung des Hinweises auf die Patenterteilung: **15.02.2017**
(21) Anmeldenummer: 09719933.5
(22) Anmeldetag: 11.03.2009
(51) Int. Cl.: F16D 65/092

(54) **SCHEIBENBREMSE MIT ORIENTIERUNGSGESICHERTEM EINBAU DER BREMSBELÄGE**
DISK BRAKE HAVING ORIENTATION-PROOF INSTALLATION OF THE BRAKE LININGS
FREIN À DISQUE GARANTISSANT UN MONTAGE AVEC ORIENTATION CORRECTE DES GARNITURES DE FREIN

(30) Priorität: 11.03.2008 DE 102008013514
(43) Veröffentlichungstag der Anmeldung: 24.11.2010
(73) Patentinhaber: TRW KFZ Ausrüstung GmbH, 56566 Neuwied (DE)
(72) Erfinder: BARR, Stephen, Philip, John, 56237 Nauort (DE); JANDL, Andreas, E-31007 Pamplona (Navarra) (ES)
(74) Vertreter: von Hellfeld, Axel
(86) Internationale Anmeldenummer: PCT/EP2009/001741
(87) Internationale Veröffentlichungsnummer: WO 2009/112249

(56) Entgegenhaltungen:
- EP-A- 1 473 481
- EP-A1- 0 752 541
- EP-A1- 1 591 689
- WO-A-2007/085441
- WO-A1-2007/045493
- WO-A1-2007/051616
- DE-A1- 4 332 709
- DE-A1-102004 052 541
- DE-A1-102005 019 255
- GB-A- 2 030 666
- JP-A- 5 209 640
- JP-A- 2008 185 134

## Beschreibung

Die Erfindung betrifft Scheibenbremsen.

Scheibenbremsen wirken mit einer mit dem Rad rotierende Bremsscheibe zusammen und enthalten als wesentliche Komponenten einen in Bezug auf das Fahrzeug ortsfesten Bremsträger, Bremsbeläge auf beiden Seiten der Bremsscheibe, die zum Bremsen beidseitig an die Scheibe angepresst werden, und z. B. einen Sattel oder dergleichen, der die Bremsscheibe übergreifend dazu dient, Bremskraft auf die Bremsbeläge zu übertragen. Dabei soll hier der Begriff "Bremsbelag" sowohl den eigentlichen Reibbelag erfassen als auch die den Reibbelag tragende sogenannte Belagträgerplatte. Die Belagträgerplatte besteht in der Regel aus einem Metall. Beim Bremsen wird die durch Reibung erzeugte Bremskraft über die Bremsbeläge in den Bremsträger eingeleitet.

Ist der Reibbelag abgenutzt, so müssen die Bremsbeläge erneuert werden. Dazu muss die Bremse teilweise auseinandergenommen werden und die Bremsbeläge müssen in entsprechende Schächte im Bremsträger eingelegt werden. Dabei kommt es darauf an, dass die Reibbeläge des Bremsbelages jeweils der Bremsscheibe zugekehrt sind. Für jeden Bremsbelag gibt es grundsätzlich zwei Orientierungen, in denen er am Bremsträger angeordnet werden kann: in der genannten richtigen Orientierung, in welcher der Reibbelag der (rotierenden) Bremsscheibe zugekehrt ist und in einer falschen Orientierung, in welcher der Reibbelag von der Bremsscheibe abgekehrt ist. Da die Bremsbeläge in aller Regel eine gewisse Symmetrie aufweisen, ist es durchaus im Bereich des Möglichen, dass insbesondere wenig erfahrenes Personal einen Reibbelag verkehrt herum in die Bremse einsetzt mit der Folge einer funktionsuntüchtigen Bremse.

Es gibt im Stand der Technik bereits Vorschläge, sicherzustellen, dass ein Bremsbelag nur in der richtigen Orientierung, d.h. mit der Bremsscheibe zugekehrtem Reibbelag, in die Bremse eingebaut werden kann.

Die EP 1 473 481 sieht zur Verhinderung eines verkehrten Einbaus eines Bremsbelags in eine Scheibenbremse einen Vorsprung am Bremsträger vor, der in eine komplementäre Ausnehmung am Bremsbelag eingreift. Die Ausnehmung im Bremsbelag ist nicht durchgehend, d.h. sie erstreckt sich nicht über die gesamte Stärke des Bremsbelages und der zugeordnete Vorsprung am Bremsträger hat entsprechende Abmessungen, ist also stiftartig. Dieser Stand der Technik beschreibt auch eine außermittige Anordnung aus einem Vorsprung und einer komplementären Ausnehmung im Bremsbelag. Bremsen der hier in Rede stehenden Art haben eine sogenannte Mittelebene. Die Mittelebene steht senkrecht auf der Ebene der Bremsscheibe und geht zumindest angenähert durch deren Mittelpunkt. Die Mittelebene teilt also eine Bremse in zwei Teile, die im Wesentlichen, bis auf weiter unten näher beschriebene Abweichungen, symmetrisch in Bezug auf die Mittelebene sind. In diesem Sinne bedeutet "außermittig" also eine Anordnung entfernt von der Mittelebene.

Die DE 10 2005 019 255 A1 beschreibt eine Scheibenbremse mit auf beiden Seiten der Mittelebene im Wesentlichen symmetrisch angeordneten Vorsprüngen und entsprechenden Ausnehmungen in den Belagträgerplatten.

Die EP 0 752 541 A1 zeigt ebenfalls Anordnungen zur Verhinderung eines verkehrten Einbaus von Bremsbelägen in eine Schwimmsattelbremse (Scheibenbremse), wobei gemäß einem Ausführungsbeispiel die Belagträgerplatten und damit auch der Reibbelag auf einer Seite der Mittelebene in Bezug auf diese eine schräge Kante haben, während auf der anderen Seite der Mittelebene die entsprechenden Flächen ohne Schräge gestaltet sind.

Die EP 1 632 692 A2 zeigt einen Bremsbelag mit Vertiefungen auf beiden Seiten der Mittelebene und symmetrisch dazu und einen einzigen Vorsprung auf dem Bremsträger, der in eine der Vertiefungen eingreift. Das System bietet keine Sicherung gegen einen verkehrten Einbau eines Bremsbelages.

Die EP 0 347 523 B1 stellt sicher, dass nur die für die Bremse vorgesehenen Beläge eingebaut werden, sichert aber nicht gegen einen verkehrten Einbau von Bremsbelägen im obigen Sinn.

Die DE 29 195 35 beschreibt eine Scheibenbremse mit unterschiedlich langen Reibbelägen auf beiden Seiten der Bremsscheibe derart, dass die Beläge nur in richtiger Orientierung eingebaut werden können.

Soweit der Stand der Technik vorschlägt, auf beiden Seiten der Mittelebene, also einlaufseitig der Bremse und auslaufseitig der Bremse, eine Änderung der Gestalt des Bremsbelages vorzunehmen, kann es zu Problemen dadurch kommen, dass der Schwerpunkt des Bremsbelages aus der Mittelebene herausverlagert wird. Wird nämlich auf einer Seite der Mittelebene mehr Material vom Bremsbelag entfernt, sei es vom Reibbelag und/oder von der Belagträgerplatte, dann verliert der Bremsbelag seine Spiegelsymmetrie in Bezug auf die Mittelebene und dies kann beim Bremsen zu ungleichmäßigen Kraftverteilungen führen, was einen höchst unerwünschten ungleichmäßigen Verschleiß der Reibbeläge oder auch unerwünschte Vibrationen der Bremse zur Folge haben kann. Die Erfindung geht von dieser Erkenntnis aus und hilft dem Problem ungleichmäßigen Verschleißes oder von Vibrationen ab.

Dort wo der Stand der Technik Ausnehmungen (Vertiefungen) in den Bremsbelägen vorsieht, die im Reibbelag ausgeformt sind, werden die Ausnehmungen beim Betrieb der Bremse nach und nach verschwinden, sodass bei einem Auseinanderbau der Bremse und dem anschließenden Zusammenbau nicht mehr die richtige Orientierung der Bremsbeläge gewährleistet ist.

Der Erfindung liegt die Aufgabe zugrunde, eine Scheibenbremse und Bremsbeläge hierfür bereitzustellen, die bei geringem Herstellungsaufwand einen richtigen Einbau der Bremsbeläge unter allen Betriebsbedingungen gewährleisten und einen gleichmäßigen Bremsverschleiß ohne Bremsvibrationen fördern.

Eine erste, jedoch nicht erfindungsgemäße Variante ist eine Scheibenbremse mit einem Bremsträger, zwei Bremsbelägen einschließlich Belagträgerplatten, Positionierungsmitteln auf beiden Seiten der Mittelebene der Bremse am Bremsträger und/oder an den Bremsbelägen, mittels derer die Bremsbeläge in Bezug auf den Bremsträger so angeordnet sind, dass ein Bremsbelag nur in einer Orientierung am Bremsträger montierbar ist, wobei die Positionierungsmittel asymmetrisch in Bezug auf die Mittelebene der Bremse angeordnet sind, und wobei die Bremsbeläge ihren Schwerpunkt zumindest annähernd auf der Mittelebene der Bremse haben.

Die vorstehend genannte Vorschrift, wonach die Bremsbeläge ihren Schwerpunkt auf der Mittelebene der Bremse haben sollen, bedeutet kein streng mathematisches Zusammenfallen von Schwerpunkt und Mittelebene, sondern technisch gesehen eine Lage des Schwerpunktes in Bezug auf die Mittelebene, mit der die angegebenen Ziele erreicht werden, also trotz der asymmetrischen Ausgestaltung der genannten Positionierungsmittel sich der Schwerpunkt nicht wesentlich von der Mittelebene wegbewegt. In diesem Sinne sind Abstände des Schwerpunktes von der Mittelebene von 4% oder weniger, vorzugsweise 3% oder weniger, weiter vorzugsweise 2% oder weniger und besonders bevorzugt 1% oder weniger zugelassen. Die Prozentangaben beziehen sich auf die Gesamtlänge des Reibbelages, gemessen über seinen äußeren Umfang.

Die genannten Positionierungsmittel können gemäß einer Ausgestaltung der Erfindung als Bremskraft aufnehmende Führungsmittel gestaltet sein, oder auch, gemäß einer anderen Ausgestaltung, als im Wesentlichen keine Bremskraft aufnehmende (reine) Positionierungsmittel.

Gemäß einer weiteren nicht erfindungsgemäßen Variante wird das gleiche Problem wie oben, nämlich ein asymmetrischer Verschleiß des Reibbelages und Vibrationen in der Bremse bei einer Scheibenbremse mit einem Bremsträger, zwei Bremsbelägen einschließlich Belagträgerplatten, und Mitteln auf beiden Seiten der Mittelebene der Bremse zur Verhinderung eines verkehrten Einbaus eines Bremsbelages dadurch gelöst, dass die genannten Mittel jeweils am Bremsträger oder am Bremsbelag zwei Vorsprünge und komplementäre Vertiefungen im anderen Bauteil aufweisen, derart, dass die Abstände der Vorsprünge bzw. Vertiefungen von der Mittelebene der Bremse verschieden sind. Zum Beispiel ist im Bremsbelag auf beiden Seiten der Mittelebene jeweils eine Vertiefung ausgeformt, wobei die Vertiefungen annähernd (aber nicht exakt) symmetrisch in Bezug auf die Mittelebene angeordnet sind. Dies bedeutet, dass die beiden Vertiefungen jeweils einen unterschiedlichen Abstand von der Mittelebene haben, derart, dass ein verkehrter Einbau des Bremsbelages am Bremsträger unmöglich ist und trotzdem der Schwerpunkt des Bremsbelages im Wesentlichen auf seiner Mittelebene liegt. Um einen verkehrten Einbau eines Bremsbelages zu vermeiden, genügt schon ein ganz geringfügiger Versatz der beiden Vertiefungen in Bezug auf eine exakt symmetrische Anordnung. Dieser Versatz soll auch so klein wie möglich sein, damit der Schwerpunkt des Reibbelages möglichst wenig aus der Mittelebene herausgerückt wird. Vergrößert man den Unterschied der Abstände der Vertiefungen auf den beiden Seiten der Mittelebene, dann folgt daraus auch - sofern die beiden Vertiefungen die gleiche Gestalt haben - eine zunehmende Verschiebung des Schwerpunktes aus der Mittelebene heraus. Dem kann dadurch begegnet werden, dass die Gestalt (Form) der Vertiefungen auf den beiden Seiten verschieden gewählt wird. Diejenige Vertiefung, die näher an der Mittelebene liegt, müsste entsprechend größer geformt werden und damit könnte dann die Lage des Schwerpunktes im Wesentlichen auf der Mittelebene beibehalten werden. In diesem Sinne sind unterschiedliche Gestaltungen der beiden Vertiefungen auf beiden Seiten der Mittelebene im Sinne der Erfindung möglich, auch wenn der Herstellungsaufwand - je nach den Herstellungsbedingungen - leicht erhöht sein kann. Bevorzugt werden gleiche Gestaltungen der beiden Vertiefungen mit einem möglichst geringfügigen Unterschied im Abstand von der Mittelebene. Der Unterschied im Abstand von der Mittelebene kann zum Beispiel 10% oder weniger des längeren Abstandes betragen, vorzugsweise 6% oder weniger, weiter vorzugsweise 3% oder weniger und besonders bevorzugt 2% oder weniger.

Eine dritte, ebenfalls nicht erfindungsgemäße Variante zur Lösung des gleichen Problems bezieht sich auf eine Scheibenbremse mit Bremsträger, und zwei Bremsbelägen einschließlich Belagträgerplatten, die sogenannte Clips oder auch Einsatzteile aufweist, die am Bremsbelag und/oder am Bremsträger befestigt sind, zur Aufnahme jeweils eines Bremsbelages und zur Führung desselben am Bremsträger. Solche Einsatzteile (auch "pad clip" genannt) sind am Bremsbelag mit geeigneten Formgestaltungen oder Vorspannungen befestigt und finden sich zum Beispiel in der US 6,269,915 B1, US 7,086,506 B2, US 6,527, 090 B1, US 5,649,610, und US 5,901,815.

Diese Variante löst das oben genannte Problem des ungleichmäßigen Verschleißes des Reibebelages und/oder der Vibrationen dadurch, dass das in Rede stehende Einsatzteil (auch "pad spring" genannt) und der Bremsträger so geformt sind, dass das Einsatzteil mit dem daran geklemmten Bremsbelag nur in einer Orientierung am Bremsträger montierbar ist. Wenn hier (wie auch oben) von "einer Orientierung" die Rede ist, so meint dies selbstverständlich die im obigen Sinne richtige Orientierung.

Die vorstehend beschriebenen Einsatzteile werden zum Beispiel in Nuten im Bremsträger aufgenommen. Es ist gemäß einer anderen Ausgestaltung dieser dritten Variante möglicht, statt der in die Nuten des Bremsträgers eingebauten Einsatzteile auch Clips auf Vorsprünge an dem Bremsbelag aufzusetzen. Diese aufgesetzten Clips könnte man als Aufsatzteile analog den oben beschriebenen Einsatzteilen bezeichnen. Ihre Funktion wäre analog den genannten Einsatzteilen, d.h. durch eine asymmetrische Ausgestaltung der Aufsatzteile könnte der orientierungsgesicherte Einbau der Bremsbeläge erreicht werden.

Bei der vorstehend genannten Variante kann also der Bremsbelag unverändert bleiben, d.h. seine Spiegelsymmetrie in Bezug auf seine Mittelebene wird durch keinerlei Vertiefungen oder dergleichen gestört und somit liegt der Schwerpunkt auf der Mittelebene. Vielmehr braucht z. B. nur das Einsatzteil asymmetrisch in Bezug auf die Mittelebene der Bremse gestaltet zu werden. Das Einsatzteil greift bei solchen Scheibenbremsen in entsprechend ausgeformte Vertiefungen oder andere Formgebungen am Bremsträger ein (vgl. den oben genannten Stand der Technik). Asymmetrische Gestaltungen des Einsatzteils, d.h. unterschiedliche Formen des Einsatzteils auf der Einlaufseite und der Auslaufseite der Bremse, sind ohne großen Aufwand möglich. Das Einsatzteil greift, wie gesagt, auf beiden Seiten der Mittelebene in eine entsprechende Form, zum Beispiel Nut, im Bremsträger.

Will man die Erfindung vorteilhaft so realisieren, dass die Form am Bremsträger, also zum Beispiel die Nut, unverändert bleibt, also zum Beispiel auf beiden Seiten gleich ist, dann kann in einer bevorzugten, wenig aufwändigen Realisierung der Erfindung vorgesehen sein, dass das Einsatzteil auf beiden Seiten der Mittelebene unterschiedlich geformt ist und in einer der beiden Nuten am Bremsträger ein Einsatz, zum Beispiel auch in Form einer geklemmten Blattfeder oder dergleichen vorgesehen ist, der die Nut nicht völlig ausfüllt, aber genau komplementär zulässt, dass das Einsatzteil in nur einer Orientierung am Bremsträger befestigbar ist.

Eine vierte nicht erfindungsgemäße Variante löst das gleiche Problem bei einer Scheibenbremse mit einem Bremsträger, zwei Bremsbelägen einschließlich Belagträgerplatten und einem von oben auf die Bremse zu montierenden Sattel, Rahmen oder dergleichen dadurch, dass auf der Oberseite der Bremsbeläge ein Vorsprung oder eine Vertiefung vorgesehen ist und auf dem Sattel eine komplementäre Vertiefung oder ein komplementärer Vorsprung ausgeformt sind derart, dass der Sattel nur dann von oben auf der Bremse montierbar ist, wenn die Bremsbeläge in richtiger Orientierung in den Bremsträger eingesetzt sind. Zum Beispiel kann auf jedem Bremsbelag z. B. integral mit der Trägerplatte zumindest annähernd mittig (zur Vermeidung einer Verschiebung des Schwerpunktes aus der Mittelebene heraus) ein Vorsprung nach oben vorgesehen sein, der bei richtiger Montage des Bremsbelages genau in eine komplementäre Ausnehmung im Sattel passt, während bei falscher Orientierung des Bremsbelages im Bremsträger der Sattel bei der anschließenden Montage mit seiner Vertiefung nicht genau über dem Vorsprung zu liegen kommt, sodass er gegen den Vorsprung anstößt und nicht montierbar ist. Der Monteur merkt dies und wird die Bremsbeläge umgekehrt einbauen, damit der Sattel mit seiner Vertiefung den Vorsprung aufnimmt und so in seine endgültige Montageposition gelangt. Wenn hier von "oben" die Rede ist, dann meint dies in sinnfälliger Weise eine Anordnung der Bremse derart, dass sie in Bezug auf die Schwerkraft so gedreht ist, dass der Sattel vertikal von oben auf die Bremse gesetzt werden kann. Mit anderen Worten: "oben" meint "radial außen" in Bezug auf die Drehachse der Bremsscheibe.

Die vorstehend erläuterte vierte Variante kann auch so verwirklicht werden, dass ein Blechteil am Bremsbelag oder ein Blechteil am Sattel mit dem genannten Vorsprung bzw. der Vertiefung befestigt wird. Im Sinne der vorstehenden Beschreibung der vierten Variante zählt dann das genannte Blechteil als Teil des Bremsbelages bzw. als Teil des Bremssattels. Es ist auch möglich, diese vierte Variante dahingehend abzuwandeln, dass sowohl am Sattel als auch am Bremsbelag jeweils ein Blechteil angeordnet ist, wobei das eine Blechteil den Vorsprung und das andere Blechteil die Vertiefung aufweist.

Wenn oben bei allen Ausführungsbeispielen jeweils von Vorsprüngen und Vertiefungen in zusammenwirkenden Bauteilen die Rede ist, also zum Beispiel Vorsprüngen am Bremsträger und Vertiefungen am Bremsbelag, dann kann dies auch jeweils dahingehend umgekehrt werden, dass der Vorsprung am anderen Bauteil, beim in Rede stehenden Beispiel also am Bremsbelag, ausgebildet sein kann, während die Vertiefung dann am anderen Bauteil ausgeformt ist, beim Beispiel also im Bremsträger. Bezogen auf die oben erläuterte vierte Variante, bei der der Bremssattel verwendet wird, um den orientierungsgesicherten Einbau der Bremsbeläge zu gewährleisten, können also die Vorsprünge und Vertiefungen auch dahingehend vertauscht werden, dass am einen Bauteil der Vorsprung und am anderen Bauteil die Vertiefung vorgesehen sind, wobei die in diesem Sinne zusammenwirkenden Bauteile eben vertauschbar sind.

Gemäß einer fünften nicht erfindungsgemäßen Variante können auch Scheibenbremsen mit orientierungsgesichertem Einbau der Bremsbeläge bereitgestellt werden, bei denen die Bremsbeläge auf Bolzen geführt sind und die Bolzen Bremskraft aufnehmen. Solche Scheibenbremsen sind beispielsweise in der WO 2004/083667 A1 beschrieben. Bei solchen Bremsen werden die Bolzen in Ausnehmungen (zum Beispiel Vertiefungen oder Löcher) im Bremsbelag aufgenommen. Dies ist zum Beispiel in den Figuren 12, 13, 18, 19 des genannten Stands der Technik illustriert. Gemäß einer ersten Ausgestaltung können bei solchen Scheibenbremsen die Bolzen und die zugehörigen Ausnehmungen in den Bremsbelägen so asymmetrisch gestaltet sein, dass, wie oben beschrieben, die Bremsbeläge nur in der richtigen Orientierung in der Bremse montierbar sind. Eine unterschiedliche Ausgestaltung der Bolzen bzw. ihrer Aufnahmen in den Bremsbelägen, ist aber herstellungstechnisch relativ aufwändig, sodass Ausführungsformen dahingehend vorgezogen werden, dass Einsatzteile oder Aufsatzteile im obigen Sinn für die Bolzen so vorgegeben werden, dass der orientierungsgesicherte Einbau der Bremsbeläge gewährleistet ist. So können zum Beispiel Einsätze (Clips) zum Einsetzen in die Ausnehmungen (Vertiefungen oder Löcher) in den Bremsbelägen vorgesehen sein, die nur so einbaubar sind, dass die Orientierungssicherung beim Einbau der Bremsbeläge gegeben ist.

Um diese Variante mit den Bolzen und den Ausnehmungen (Vertiefungen oder Löcher) in den Bremsbelägen zu realisieren, dann ist es auch möglich, die Bolzen und/oder die Ausnehmungen in Bezug auf die Mittelebene der Bremse asymmetrisch zu gestalten.

Gemäß einer sechsten, erfindungsgemäßen Variante ist eine Scheibenbremse vorgesehen mit einem Bremsträger, zwei Bremsbelägen einschließlich Belagträgerplatten, einem Bremssattel, Positionierungsmitteln auf beiden Seiten der Mittelebene der Bremse am Bremssattel und/oder an den Bremsbelägen, mittels derer die Bremsbeläge in Bezug auf den Bremsträger so angeordnet sind, dass ein Bremsbelag nur in einer Orientierung am Bremsträger montierbar ist, wobei die Positionierungsmittel asymmetrisch in Bezug auf die Mittelebene der Bremse angeordnet sind, wobei die Positionierungsmittel eine Ausnehmung im Bremssattel oder in den Bremsbelägen aufweisen, die sich schräg zu der Mittelebene erstreckt.

Gemäß einer bevorzugten Ausführungsform ist die vorstehend genannte Ausnehmung im Bremssattel ausgeformt, und zwar schräg mit spitzem Winkel zur Mittelebene der Bremse verlaufend und auf der Unterseite des Bremssattels derart, dass Vorsprünge, die auf den Bremsbelägen auf deren Oberseite angeordnet sind, in die Ausnehmung so eingreifen, dass die Bremsbeläge nur in richtiger Orientierung in die Bremse einbaubar sind.

Alternativ kann bei dieser erfindungsgemäßen Variante die genannte Ausnehmung sich schräg mit spitzem Winkel zur Mittelebene der Bremse verlaufend in beiden Bremsbelägen ausgebildet sein, wobei am Bremssattel vorgesehene Vorsprünge in die Ausnehmung eingreifen derart, dass die Bremsbeläge nur in richtiger Orientierung in die Bremse einbaubar sind.

Die vorstehend genannten Ausnehmungen bei der sechsten Variante sind nutförmig und erstrecken sich auf beiden Seiten der Bremsscheibe, wobei die Mittellinie der Ausnehmung die Mittelebene der Bremse kreuzt. Dabei müssen die beiden Seitenwände der Ausnehmung nicht notwendig parallel zueinander verlaufen.

Bei beiden vorstehend beschriebenen Ausführungsbeispielen der sechsten Variante sind die genannten Vorsprünge (entweder auf den Bremsbelägen oder auf dem Bremssattel) bevorzugt asymmetrisch in Bezug auf die Mittelebene der Bremse angeordnet.

Nachfolgend werden Ausführungsbeispiele anhand der Zeichnungen
, wobei die Figuren 1 - 6 nicht erfindungsgemäße Varianten zeigen, näher erläutert. Es zeigt:
Fig. 1 schematisch einen Bremsbelag und einen diesem zugeordneten Bremsträger;
Fig. 2 schematisch ein anderes Ausführungsbeispiel einer Scheibenbremse mit orientierungsgesichertem Einbau der Bremsbeläge;
Fig. 3, 3A ein weiteres Ausführungsbeispiel einer Bremse mit orientierungsgesichertem Einbau der Bremsbeläge;
Fig. 4, 4A ein anderes Ausführungsbeispiel einer Bremse mit orientierungsgesichertem Einbau der Beläge,
Fig. 5, 6 Ausführungsbeispiele von Federrahmen zur Verwendung mit einer Scheibenbremse derart, dass ein orientierungsgesicherter Einbau der Bremsbeläge gegeben ist, und
Fig. 7, 8 erfindungsgemäße

Ausführungsbeispiele einer Bremse mit orientierungsgesichertem Einbau der Bremsbeläge.

Der Aufbau einer Schreibenbremse, insbesondere einer Schwimmsattel-Scheibenbremse, ist dem Fachmann hinlänglich bekannt, sodass dieser hier nicht im Einzelnen dargestellt zu werden braucht. Zum Beispiel kann die hier beschriebene Scheibenbremse grundsätzlich den Aufbau gemäß der US Re. 30,255 (RATH, KLASSEN) haben, oder auch den Aufbau gemäß der WO 2004/083668 A1 (SCHOG et al.). Solche Scheibenbremsen können gemäß der nachstehenden Beschreibung eines Bremsbelages und eines Bremsträgers gemäß der Figur modifiziert werden.

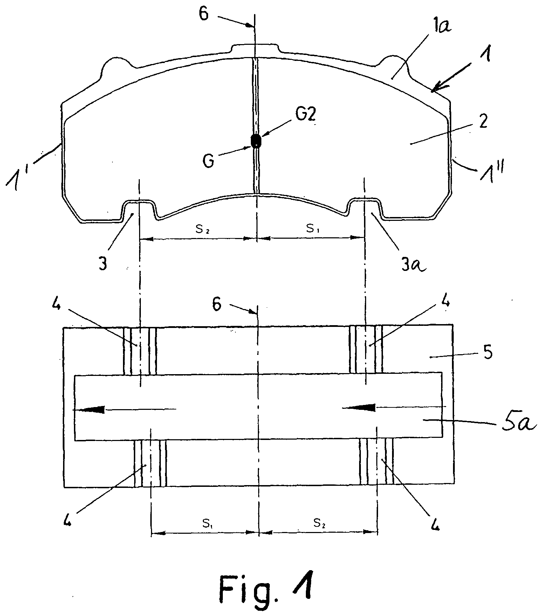

Die Figur 1 zeigt einen Bremsbelag 1 in Seitenansicht, also in axialer Richtung (d.h. in Richtung der Achse der Bremsscheibe) in Bezug auf den Einbauzustand der Bremse und den Bremsträger 5 in Draufsicht (d.h. in radialer Richtung, bezogen auf die Achse der Bremsscheibe im montierten Zustand).

Der Bremsbelag 1 hat in üblicher Weise einen Reibbelag 2 und eine Belagträgerplatte 1a.

Eine Mittelebene 6 ist in der Figur 1 strich-punktiert dargestellt. Diese Mittelebene 6 steht senkrecht zur Zeichnungsebene und ist sowohl die Mittelebene des Bremsbelages 1 als auch des Bremsträgers 5 als auch der Bremse insgesamt in der oben definierten Weise. An der radial innenseitigen Kante des Bremsbelages 1 ist auf beiden Seiten der Mittelebene 6 jeweils eine Ausnehmung (Vertiefung) 3, 3a ausgeformt. Die Vertiefungen 3, 3a sind durchgehend, d.h. gehen sowohl durch den Reibbelag 2 als auch durch die Belagträgerplatte 1a. Dies erleichtert die Herstellung.

Wären die Ausnehmungen 3, 3a nicht in dem Bremsbelag 1 ausgeformt, dann hätte der Bremsbelag 1 den Schwerpunkt G. Durch die Ausnehmungen 3, 3a aber verschiebt sich der Schwerpunkt geringfügig nach oben. Dieser Schwerpunkt des Reibbelages 1 mit den Ausnehmungen 3, 3a ist in der Figur mit G2 bezeichnet, er liegt etwas radial oberhalb (weiter entfernt von der Scheibenachse) als der Schwerpunkt G ohne die Ausnehmungen 3, 3a.

Die rotierende Bremsscheibe ist in der Figur nicht gesondert dargestellt. Wie dem Fachmann bekannt, reicht die Bremsscheibe in die Ausnehmung 5a im Bremsträger 5. Die Drehrichtung der Bremsscheibe bei Vorwärtsfahrt des Fahrzeuges ist in der Figur mit den Pfeilen in der Ausnehmung 5a im Bremsträger 5 dargestellt. Entsprechend ist die Einlaufseite ("leading edge") der Bremse in der Figur rechts dargestellt und die Auslaufseite ("trailing edge") in der Figur links.

Die auslaufseitige Ausnehmung 3 im Bremsbelag 1 hat einen Abstand S₂ von der Mittelebene 6. Die einlaufseitige Ausnehmung 3a im Bremsbelag 1 hat von der Mittelebene 6 den Abstand S₁. Wie die Figur zeigt, ist der Abstand S₁ verschieden vom Abstand S₂, beim dargestellten Ausführungsbeispiel ist der Abstand S₁ kleiner als der Abstand S₂.

Komplementär zu den Vertiefungen 3, 3a im Bremsbelag 1 sind am Bremsträger 5 Vorsprünge 4 ausgeformt. Entsprechend haben die Vorsprünge 4 auf beiden Seiten der Bremsscheibe (d.h. auf beiden Seiten der die Bremsscheibe aufnehmenden Ausnehmung 5a im Bremsträger 5) unterschiedliche Abstände von der Mittelebene 6. Die Abstände S₁, S₂ sind in der Figur jeweils ersichtlich. Die Vorsprünge 4 passen jeweils genau in die Vertiefungen 3, 3a. Deshalb kann der Bremsbelag 1 auf der einen Seite des Bremsträgers 5, also zum Beispiel in der Figur oben, nur in einer einzigen Orientierung positioniert werden, nämlich so, dass der Bremsbelag 2 der Bremsscheibe, d.h. der Ausnehmung 5a für die Bremsscheibe, zugekehrt ist. Auf der anderen Seite, also in der Figur unten, muss der Bremsbelag 1 zur Montage so gedreht werden, dass wiederum sein Reibbelag 2 der Bremsscheibe zugekehrt ist.

Beim dargestellten schematischen Ausführungsbeispiel ist der Abstand S₁ etwa 8% kleiner als der Abstand S₂. Wie einleitend ausgeführt ist, sollen die Abstände S₁, S₂ einen möglichst geringen Unterschied haben, der aber ausreicht, dass die Bremsbeläge nur in der beschriebenen Weise richtig orientiert am Bremsträger 5 montierbar sind. Der im Sinne der Erfindung zulässige Unterschied in den Abständen S₁, S₂ hängt von den Toleranzen der Passgenauigkeit zwischen den Vorsprüngen 4 am Bremsträger 5 und den Ausnehmungen 3, 3a am Bremsbelag 1 ab. Beim dargestellten Ausführungsbeispiel sind Unterschiede zwischen den Abständen S₂ und S₁ von 12% oder weniger, weiter bevorzugt von 10% oder weniger, noch weiter bevorzugt von 5% oder weniger vorgesehen.

Die Vorsprünge 4 auf dem Bremsträger 5 sind durchgehend, d.h. erstrecken sich, wie in der Figur dargestellt ist, über den gesamten Rahmen des Bremsträgers 5. Die Vorsprünge 4 am Bremsträger 5 positionieren beim dargestellten Ausführungsbeispiel im Eingriff in die Ausnehmungen 3, 3a im Bremsbelag 1 auch den Bremsbelag auf dem Bremsträger. Zusätzlich sind, wie bei den hier behandelten Scheibenbremsen üblich, kraftaufnehmende Eingriffsflächen zwischen Bremsbelag 1 und Bremsträger 4 in der bekannten Weise vorgesehen. Insbesondere schlagen die einlaufseitigen bzw. auslaufseitigen Kanten 1' bzw. 1" gegen entsprechend ausgebildete Anschläge am Bremsträger 5 (nicht gezeigt).

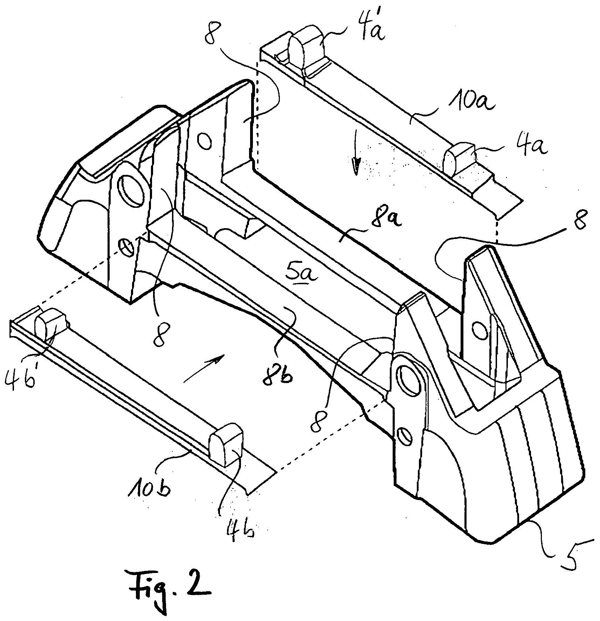

Figur 2 zeigt ein anderes Ausführungsbeispiel eines orientierungsgesicherten Einbaus von Bremsbelägen in eine Scheibenbremse.

In Figur 2 ist nur der Bremsträger der Bremse gezeigt, wobei die Bremsbeläge und die Bremsscheibe sowie der Sattel weggelassen sind, um das Wesentliche der Neuerung deutlicher herauszustellen. Der Bremsträger 5 hat in bekannter Weise Schächte 8, in welche die Bremsbeläge (nicht gezeigt) in der Figur von oben her einsetzbar sind. In den Schächten werden die Bremsbeläge in bekannter Weise geführt und beim Bremsen wird die Bremskraft in die Bremsbeläge eingeleitet. Gemäß Fig. 2 werden Einsatzteile 10a, 10b, die hier die Positionierungsmittel sind, in der durch Pfeile angedeuteten Weise in die Schächte 8 eingeführt. Die Einsatzteile 10a, 10b stoßen im eingebauten Zustand an die Böden 8a bzw. 8b in den Schächten. Radial außenseitig der Einsatzteile 10a, 10b sind Vorsprünge 4a, 4a', 4b, 4b' analog den Vorsprüngen 4 gemäß Fig. 1 ausgeformt. Somit haben die Vorsprünge 4a und 4a' geringfügig unterschiedliche Abstände von der Mittelebene der Bremse und analog haben die Vorsprünge 4b, 4b' ebenfalls geringfügig unterschiedliche Abstände von der Mittelebene, wie oben anhand der Fig. 1 beschrieben ist. In den Bremsbelägen sind dann entsprechende Ausnehmungen analog den Ausnehmungen 3, 3a gemäß Fig. 1.

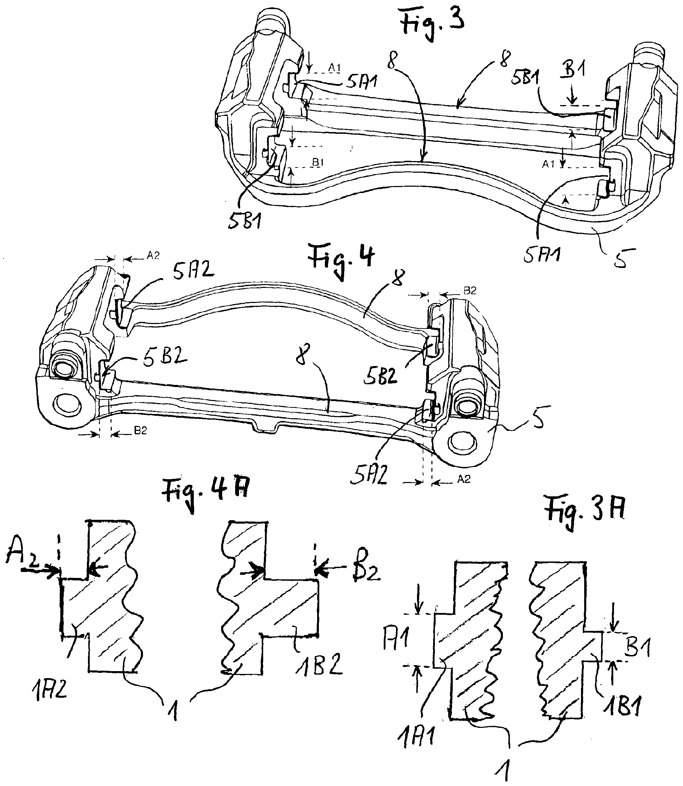

Die Figuren 3 und 3A zeigen ein weiteres Ausführungsbeispiel einer Scheibenbremse mit orientierungsgesichertem Einbau der Bremsbeläge. Bei diesem Ausführungsbeispiel sind im Bremsträger 5 in an sich bekannter Weise Nuten 5A1, 5B1 zur Führung der Bremsbeläge (in Figur 3 nicht gezeigt; Figur 3A zeigt den zugehörigen Bremsbelag) und am Bremsbelag Vorsprünge 1A1, 1B1 ausgeformt, welche in die Nuten eingreifen. Beim Stand der Technik sind die Vorsprünge an den Bremsbelägen 1 auf beiden Seiten symmetrisch, d.h. gleich. Entsprechend sind beim Stand der Technik auch die Nuten im Bremsträger gleich, und zwar sowohl auf beiden Seiten der Mittelebene in Bezug auf einen Bremsbelag, als auch in Bezug auf die Bremsscheibe, d. h. alle vier Nuten sind in der Regel beim Stand der Technik gleich.

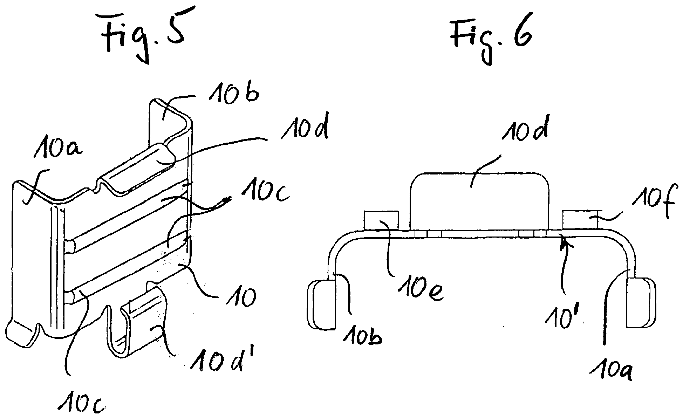

Erfindungsgemäß sind beim Bremsbelag 1 gemäß Fig. 3A auf beiden Seiten unterschiedlich geformte Vorsprünge 1A1, 1B1 ausgeformt. Die Vorsprünge greifen in die Nuten im Bremsträger. Wie Fig. 3A zeigt, hat der Bremsbelag 1 auf der einen Seite einen Vorsprung 1A1 (zum Beispiel auf der Auslaufseite der Bremse) mit einer radialen Höhe A1 und auf der anderen Seite einen Vorsprung 1B1 mit einer radialen Höhe B1. Die radiale Höhe A1 ist größer als die radiale Höhe B1. Entsprechend sind die Nuten 5A1 und 5B1 so gestaltet, dass der Vorsprung 1A1 genau in die Nut 5A1 und der Vorsprung 1B1 genau in die Nut 5B1 passt, also der Einbau des Bremsbelages am Bremsträger 5 nur in der richtigen Orientierung möglich ist. Dabei können die Nuten von vornherein so gestaltet sein, dass nur genau dieser Einbau möglich ist, was also unterschiedliche Nuten am Bremsträger 5 auf der Einlaufseite und auf der Auslaufseite der Bremse verlangen würde. Dies ist herstellungstechnisch aufwändiger als eine Lösung, bei der die Nuten des Bremsträgers alle gleich sind, wobei dann auf einer Seite der Bremse (auslaufseitig oder einlaufseitig) ein Einsatzteil (Clip) in die Nut eingesetzt ist, um die Kontur der Nut so abzuändern, dass nur einer der Vorsprünge am zugehörigen Bremsbelag in diese Nut passt. Beispiele solcher in Nuten im Bremsträger einsetzbaren Einsatzteile sind in den Figuren 5, 6 gezeigt (siehe unten).

Beim Ausführungsbeispiel gemäß den Figuren 3, 3A passt der Vorsprung 1A1 mit seiner radialen Höhe A1 genau in die Nut 5A1 im Bremsträger 5 gemäß Fig. 3. Auf der Einlaufseite der Bremse (angenommen, in den Figuren dreht die Bremsscheibe gegen den Uhrzeigersinn) ist in die Nut 5B1 ein Einsatzteil so eingesetzt, dass der Vorsprung 1A1 nicht in diese Nut passt, sondern nur der Vorsprung 1B1.

Beim Ausführungsbeispiel gemäß den Figuren 4 und 4A unterscheiden sich die am Bremsbelag 1 ausgebildeten Vorsprünge nicht durch ihre radiale Höhe (wie beim Ausführungsbeispiel gemäß den Figuren 3, 3A), sondern durch ihre Länge (Tiefe) in Umfangsrichtung der Bremsscheibe. Wie Figur 4A zeigt, hat der Vorsprung 1B2 auf der Einlaufseite (wiederum angenommen, dass in Figur 4 die Bremsscheibe gegen den Uhrzeigersinn dreht) eine größere Länge als der Vorsprung 1A2 auf der Auslaufseite (in den Figuren links). Die Länge B2 des Vorsprunges 1B2 ist größer als die Länge A2 des Vorsprungs 1A2. Entsprechend sind die Nuten 5A2, 5B2 in Figur 4 gestaltet, nämlich analog den Figuren 3, 3A so, dass bei dieser Variante der Erfindung die Längen der Vorsprünge 1A2, 1B2 an den Bremsbelägen 1 in Umfangsrichtung und damit zusammenwirkende Einsatzteile (Clips) in den Nuten den orientierungsgesicherten Einbau der Bremsbeläge bewerkstelligen.

Die Figuren 5 und 6 zeigen Ausführungsbeispiele der erwähnten Einsatzteile (Clips) in schematischer Darstellung. Gemäß Fig. 5 hat ein Einsatzteil 10 zwei rippenartige Vorsprünge 10C, die beim Einbau in eine Nut (zum Beispiel 5B1 oder 5A2 gemäß den Figuren 3 bzw. 4) gegen den Boden der Nut anstoßen. Damit wird die Nut neu geformt, und zwar so, dass in der oben beschriebenen Weise der Bremsbelag nur in richtiger Orientierung einbaubar ist aufgrund der asymmetrischen Gestaltung der Vorsprünge ("Arme")

Mittels vorgespannter Laschen 10d, 10d' wird das Einsatzteil 10 am Bremsträger in der Nut verklemmt und die Seitenarme 10a, 10b des Einsatzteils 10 kommen in zum Beispiel der Nut 10B1 oben bzw. unten zu liegen, d.h. radial außen und radial innen in Bezug auf die Bremse als Ganzes.

Die Angabe "radial" bezieht sich hier auf eine Sicht ausgehend von der Achse der Bremsscheibe. Somit verringern die Seitenarme 10a, 10b des Einsatzteils 10 die radiale Höhe in der Nut 5B1, sodass der vorstehend beschriebene orientierungsgesicherte Einbau der Bremsbeläge möglich ist.

Figur 6 zeigt ein Einsatzteil 10' mit Vorsprüngen 10e, 10f analog den Vorsprüngen 10c gemäß Fig. 5. Auch dieses Einsatzteil (Clip) dient der oben beschriebenen Gestaltung einer Nut an einem Bremsträger, entweder auf der Einlaufseite oder auf der Auslaufseite.

Das hier beschriebene Einsatzteil ist gemäß einer bevorzugten Ausgestaltung ein Blechteil. Es ist vorzugsweise unter Vorspannung am Bremsträger oder am Bremsbelag befestigbar. Denkbar sind auch Einsatzteile aus Federstahl oder dergleichen und auch Kunststoffteile, wenn sie die erforderlichen mechanischen Eigenschaften haben. Die hier erwähnten Positionierungsmittel brauchen sich nicht über die volle Stärke eines Bremsbelages zu erstrecken. Vielmehr genügt es, wenn die Positionierungsmittel (Vorsprünge/Vertiefungen) sich nur über die Stärke der Belag-Trägerplatte und über einen Teil der Stärke des Bremsbelages erstrecken.

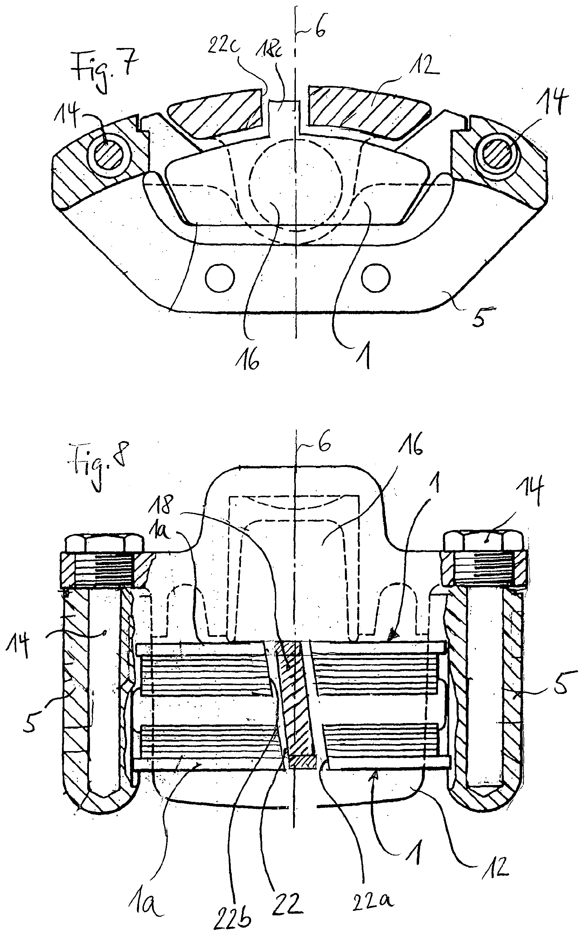

Die Figuren 7 und 8 zeigen eine sechste, erfindungsgemäße Variante einer Scheibenbremse, bei der ein orientierungsgesicherter Einbau der Bremsbeläge im Zusammenwirken der Bremsbeläge mit dem Bremssattel gesichert ist.

Die Figur 7 zeigt eine Scheibenbremse mit einem Bremssattel 12, der über Bolzen 14 in Bezug auf den Bremsträger 5 in bekannter Weise verschiebbar ist. In den Fig. 7 und 8 ist die Lage des Bremskolbens bzw. dessen Aufnahme mit dem Bezugszeichen 16 angedeutet. Ansonsten sind in den Figuren bei allen Ausführungsbeispielen einander entsprechende oder funktionsähnliche Bauteile und Komponenten mit gleichen Bezugszeichen versehen, gegebenenfalls ergänzt durch Buchstaben.

Figur 7 zeigt einen Schnitt durch eine Scheibenbremse senkrecht zur Achse, also einen Radialschnitt im oben definierten Sinn. Bei diesem Ausführungsbeispiel ist eine Ausnehmung 22c im Bremssattel ausgeformt, die sich im Wesentlichen axial erstreckt, allerdings schräg zur Mittelebene 6 der Bremse. Die schräge Orientierung der Ausnehmung 22c im Bremssattel ist auch in Figur 8 anhand der dort gezeigten Ausnehmung 22 erkennbar. In einer Draufsicht (in Fig. 7 nicht gezeigt) auf den Bremssattel 12 hätte also die Ausnehmung 22c in Bezug auf die Mittelebene 6 der Bremse analog den ähnlichen Verlauf wie die Ausnehmung 22 gemäß Figur 8. Beim Ausführungsbeispiel gemäß Figur 7 sind auf beiden Bremsbelägen 1 jeweils Vorsprünge 18c vorgesehen, die in die Ausnehmung 22c so eingreifen, dass der orientierungsgesicherte Einbau der Bremsbeläge in Bezug auf den Bremsträger 5 gewährleistet ist. Die Vorsprünge 18c sind asymmetrisch in Bezug auf die Mittelebene 6 der Bremse angeordnet, wie in Figur 7 dargestellt ist. Dabei entspricht die Anordnung der Vorsprünge 18c in Bezug auf die Mittelebene 6 beim Ausführungsbeispiel gemäß Figur 7 analog der Anordnung der Vorsprünge 18, 20 beim in Draufsicht gezeigten Ausführungsbeispiel gemäß Figur 8, d.h. in axialer Richtung gesehen hat ein Vorsprung 18c eines Bremsbelags 1 eine asymmetrische Anordnung in Bezug auf die Mittelebene 6 derart, dass der Vorsprung auf eine Seite der Mittelebene verschoben ist, während der andere Vorsprung (nicht gezeigt) auf die andere Seite der Mittelebene 6 verschoben ist. Dabei verläuft die Ausnehmung 22c schräg unter spitzem Winkel in Bezug auf die Mittelebene 6 derart, dass nach Abnutzung der Beläge die Vorsprünge nicht gegen den Bremssattel stoßen. Die Ausnehmung 22c ist nutförmig und die Längsachse der Nut kreuzt die Mittelebene 6 der Bremse unter spitzem Winkel. Die nutförmige Ausnehmung 22c erstreckt sich über die Bremsscheibe und reicht auf beiden Seiten der Bremsscheibe so weit, dass die an den Belagträgerplatten 1a angebrachten Vorsprünge 18c in die nutförmige Ausnehmung 22c eingreifen können.

Ein Vorteil des Ausführungsbeispiels gemäß Figur 7 ist, dass die nutförmige Ausnehmung 22c von oben einsehbar ist, so dass bei Montage der Bremse der Einbau des Bremsbelages 1 sichtbar ist.

Figur 8 zeigt eine Abwandlung der sechsten Variante bei der zwischen Bremssattel und Bremsbelägen die Positionierungsmittel vertauscht sind, d.h. beim Ausführungsbeispiel gemäß Figur 8, welches die Bremse in Draufsicht zeigt, ist ein Vorsprung 18 am Bremssattel 12 vorgesehen und greift in eine Ausnehmung 22 in den Belagträgerplatten (1a) ein, der sich über beide Bremsbeläge 1 hinweg schräg mit spitzem Winkel zur Mittelebene 6 der Bremse erstreckt. Die Wände dieser Ausnehmung 22 sind in Figur 8 mit den Bezugszeichen 22a bzw. 22b versehen. Die Ausnehmung 22 erstreckt sich nur über die oberen Bereiche der Belagträgerplatten. Dabei gilt bezüglich der asymmetrischen Anordnung des Vorsprungs 18 analog das oben zu den Vorsprüngen 18c gemäß Figur 7 Gesagte, d.h. der Vorsprung 18 am Bremssattel ist asymmetrisch in Bezug auf die Mittelebene 6 der Bremse ausgebildet, wie Figur 8 zeigt, derart, dass auch nach Abnutzung der Beläge gegen Ende der Lebensdauer eines Bremsbelages der Vorsprung 18 nicht gegen die Belagträgerplatten 1a stößt. Hierzu werden bei beiden Ausführungsbeispielen gemäß den Figuren 7 und 8 sowohl der Winkel, den die Ausnehmungen 22 bzw. 22c gegen die Mittelebene 6 bilden, und die Abmessungen des Vorsprungs passend gewählt. Die Ausnehmung 22 läuft gemäß Figur 8 über beide Bremsbeläge 1 und ist ebenfalls insgesamt etwa nutförmig in den Belagträgerplatten 1a ausgeformt. Ragt die Belagträgerplatte 1a hinreichend über den Reibbelag hinaus, dann können gemäß einer besonderen Ausgestaltung Ausnehmungen (entsprechend der Ausnehmung 22) nur in den Belagträgerplatten 1a beider Bremsbeläge 1 ausgeformt sein, in welche dann der Vorsprung 18 eingreift. Die Mittelachse der Ausnehmung 22, die sich über die Bremsscheibe erstreckt, schneidet auch hier die Mittelebene 6 der Bremse.

Die Ausführungsbeispiele gemäß den Figuren 7 und 8 können gemäß einer anderen Ausführungsform dahingehend abgewandelt werden, dass die Anordnung von Nut und Vorsprung auch am unteren Ende zwischen den Bremsbelägen und dem Bremsträger 5 vorgesehen wird. Bei Figur 7 wäre also im unteren Bereich der Bremsbeläge 1 zum Beispiel ein Vorsprung am Bremsträger vorgesehen, entsprechend dem Vorsprung 18c gemäß Figur 7, der in entsprechend schräg verlaufende Ausnehmungen an den Bremsbelägen 1 oder insbesondere an den Belagträgerplatten 1a eingreift. Auch bei dieser Anordnung verlaufen also ein Vorsprung und eine nutförmige Ausnehmung jeweils schräg zur Mittelebene 6 analog den Ausführungsbeispielen gemäß den Figuren 7 und 8. Dabei kann der Vorsprung einmal am Bremsträger 5 und die Ausnehmung an den Bremsbelägen 1 ausgeformt sein oder umgekehrt der Vorsprung an den Bremsbelägen 1 und die Ausnehmung am Bremsträger 5.

## Patentansprüche

1. Scheibenbremse mit
- einem Bremsträger (5),
- zwei Bremsbelägen (1) einschließlich Belagträgerplatten (1a),
- einem Bremssattel (12), und
- Positionierungsmitteln (18, 20, 22) auf beiden Seiten einer senkrecht zur Bremsscheibenebene verlaufenden Mittelebene (6) der Bremse derart, dass die Bremsbeläge in Bezug auf den Bremssattel im Einbauzustand der Bremsbeläge so angeordnet sind, dass ein Bremsbelag nur in einer Orientierung am Bremsträger montierbar ist,
wobei
- die Positionierungsmittel asymmetrisch in Bezug auf die Mittelebene (6) der Bremse angeordnet sind,
**dadurch gekennzeichnet, dass**
- die Positionierungsmittel eine Ausnehmung (22c) im Bremssattel (12) oder einen Vorsprung am Bremssattel (12) aufweisen, die sich auf beiden Seiten der Mittelebene (6) der Bremse erstrecken, wobei die Mittellinie der Ausnehmung bzw. des Vorsprunges sich schräg zu der Mittelebene (6) der Bremse erstreckt und diese kreuzt.

2. Scheibenbremse nach Anspruch 1, **dadurch gekennzeichnet, dass** ein Vorsprung (18c) eines Bremsbelags (1) asymmetrisch in Bezug auf die Mittelebene (6) angeordnet ist, derart, dass der Vorsprung auf eine Seite der Mittelebene (6) verschoben ist, während ein anderer Vorsprung des anderen Bremsbelags auf die andere Seite der Mittelebene (6) verschoben ist.

3. Scheibenbremse nach Anspruch 1, **dadurch gekennzeichnet, dass** die Ausnehmung (22c) im Bremssattel sich über die Bremsscheibe erstreckt und dabei auf beiden Seiten der Bremsscheibe soweit reicht, dass an den Belagträgerplatten (1a) angebrachte Vorsprünge (18c) in die Ausnehmung (22c) eingreifen.

4. Scheibenbremse nach Anspruch 1, **dadurch gekennzeichnet, dass** die Ausnehmung (22c) sich über die Bremsscheibe erstreckt und dabei auf beiden Seiten der Bremsscheibe soweit reicht, dass an den Belagträgerplatten (1a) angebrachte Vorsprünge (18c) in die Ausnehmung (22c) eingreifen, welche nutförmig ist.

5. Scheibenbremse nach Anspruch 1, **dadurch gekennzeichnet, dass** der Vorsprung bei Sicht von oben auf die Bremse einsehbar ist.

6. Scheibenbremse nach Anspruch 1, **dadurch gekennzeichnet, dass** ein Vorsprung (18) am Bremssattel (12) angeordnet ist, der in eine Ausnehmung (22) in der Belagträgerplatte (1a) eingreift.

7. Scheibenbremse nach Anspruch 1, **dadurch gekennzeichnet, dass** ein Blechteil am Bremsbelag (1) mit dem genannten Vorsprung oder der genannten Vertiefung befestigt ist.

8. Bremsbeläge für eine Scheibenbremse nach einem der vorhergehenden Ansprüche, **dadurch gekennzeichnet, dass** jeder Bremsbelag (1) an seiner Belagträgerplatte (1a) einen Vorsprung (18c) oder eine Ausnehmung aufweist, der bzw. die asymmetrisch in Bezug auf die Mittelebene (6) der Bremse angeordnet ist derart, dass die Vorsprünge (18c) oder Ausnehmungen sich auf beiden Seiten der Mittelebene (6) und schräg zu dieser erstrecken, wobei die Mittellinie der Ausnehmung oder des Vorsprunges die Mittelebene (6) der Bremse kreuzt.

## Claims

1. Disc brake comprising
- a brake carrier (5),
- two brake pads (1) including lining carrying plates (1a),
- a brake calliper (12), and
- positioning means (18, 20, 22) at both sides of a central plane (6) of the brake perpendicular to the plane of the disc such that the brake pads are arranged relative to the brake calliper, in the mounted state of the brake pads, such that a brake pad can be mounted at the brake carrier in one orientation only, wherein
- the positioning means are asymmetric relative to the central plane (6) of the brake,
**characterized in that**
- the positioning means comprise a recess (22c) in the calliper (12) or a protrusion at the calliper (12), arranged at both sides of the disc, wherein the center line of the recess and the protrusion, resp., extend slanting to the central plane (6) and cross it.

2. Disc brake according to claim 1, **characterized in that** a protrusion (18c) at a brake pad (1) is arranged asymmetrically relative to the central plane (6) such that the protrusion is shifted to one side of the central plane (6) whereas another protrusion at the other brake pad is shifted to the other side of the central plane.

3. Disc brake according to claim 1, **characterized in that** the recess (22c) in the calliper extends across the disc and extends at both sides of the disc such that protrusions (18c) provided at the lining carrying plates (1a) engage into the recess (22c).

4. Disc brake according to claim 1, **characterized in that** the recess (22c) in the calliper extends across the disc and extends at both sides of the disc such that protrusions (18c) provided at the lining carrying plates (1a) engage into the recess (22c), wherein the recess (22c) is groove-shaped.

5. Disc brake according to claim 1, **characterized in that** the protrusion is visible in top view.

6. Disc brake according to claim 1, **characterized in that** a protrusion (18) is arranged at the calliper (12) which engages into a recess (22) in the lining carrying plate (1a).

7. Disc brake according to claim 1, **characterized in that** a sheet element is fixed at the brake pad (1), said sheet element comprising said protrusion or said recess.

8. Brake pads for a disc brake according to one of the preceding claims, **characterized in that** each brake pad (1) comprises at its lining carrying plate (1a) a protrusion (18c) or recesses, which is arranged asymmetrically relative to the central plane (6) of the brake such that the protrusions (18c) or recesses are at both sides and slanted to the center plante (6), wherein the center line of the recess and the protrusion, resp., cross the center plane (6) of the brake.

## Revendications

1. Frein à disque comportant
- un support de frein (5),
- deux garnitures de frein (1), plaques porte-garniture (1a) incluses,
- un étrier de frein (12), et
- des moyens de positionnement (18, 20, 22) agencés de chaque côté d'un plan médian (6) du frein, lequel plan s'étend perpendiculairement au plan du disque de frein, de sorte que les garnitures de frein sont, une fois en place, disposées de telle manière par rapport à l'étrier de frein qu'une garniture de frein ne peut être montée sur le support que si correctement orienté,
- les moyens de positionnement étant disposés de manière asymétrique par rapport au plan médian (6) du frein,
**caractérisé en ce que**
- les moyens de positionnement présentent un évidement (22c) ménagé dans l'étrier de frein (12) ou une saillie formée sur l'étrier de frein (12) lequel ou laquelle s'étend de chaque côté du plan médian (6) du frein, la ligne médiane de l'évidement ou de la saillie s'étendant en biais par rapport à la ligne médiane (6) du frein et croisant celle-ci.

2. Frein à disque selon la revendication 1, **caractérisé en ce qu'**une saillie (18c) d'une garniture de frein (1) est disposée de manière asymétrique par rapport au plan médian (6) de sorte que la saillie est déplacée sur un côté du plan médian (6) tandis qu'une autre saillie de l'autre garniture de frein est déplacée sur l'autre côté du plan médian (6).

3. Frein à disque selon la revendication 1, **caractérisé en ce que** l'évidement (22c) ménagé dans l'étrier de frein s'étend par-dessus le disque de frein et s'étend ce faisant si loin de chaque côté du disque de frein que des saillies (18c) placées sur les plaques porte-garniture (1a) viennent s'engager dans l'évidement (22c).

4. Frein à disque selon la revendication 1, **caractérisé en ce que** l'évidement (22c) s'étend par-dessus le disque de frein et s'étend ce faisant si loin de chaque côté du disque de frein que des saillies (18c) placées sur les plaques porte-garniture (1a) viennent s'engager dans l'évidement (22c) se présentant sous la forme d'une rainure.

5. Frein à disque selon la revendication 1, **caractérisé en ce que** la saillie (18) est visible dans une vue de dessus du frein.

6. Frein à disque selon la revendication 1, **caractérisé en ce qu'**une saillie (18) est disposée sur l'étrier de frein (12), laquelle saillie est en prise dans un évidement (22) ménagé dans la plaque porte-garniture (1a).

7. Frein à disque selon la revendication 1, **caractérisé en ce qu'**une pièce de tôle est fixée sur la garniture de frein (1) à l'aide de ladite saillie ou dudit évidement.

8. Garnitures de frein pour un frein à disque selon l'une des revendications précédentes, **caractérisé en ce que** chaque garniture de frein (1) présente à sa plaque porte-garniture (1) une saillie (18c) ou un évidement, laquelle ou lequel est disposé de manière asymétrique par rapport au plan médian (6) du frein de sorte que les saillies (18c) ou les évidements s'étendent de chaque côté du plan médian (6) et en biais par rapport à celui-ci, la ligne médiane de l'évidement ou de la saillie croisant le plan médian (6) du frein.
